# EUROPEAN PATENT APPLICATION

(11) **EP 4 823 062 A1**
(43) Date of publication of application: **14.10.2026**
(21) Application number: 26171603.9
(22) Date of filing: 10.04.2026
(51) Int. Cl.: H04L 49/35, H04L 49/60

(54) **IN-NETWORK COMPUTE ENGINE FOR A NETWORK SWITCH**

(30) Priority: 11.04.2025 US 202519176629
(71) Applicant: Avago Technologies International Sales Pte. Limited, Singapore 768923 (SG)
(72) Inventor: Jiang, Xiaogang, San Ramon, 94582 (US); Anand, Anupam, Fremont, 94538 (US)
(74) Representative: Dilg, Haeusler, Schindelmann Patentanwaltsgesellschaft mbH

(57) **Abstract**

A data plane of a network switch can include: a packet switch including a first port and a second port; a first processor, coupled to the packet switch and a control plane, the first processor comprising: a first digital circuit configured to: receive a first payload of a first packet ingress to the first port; and convert first numerical data in the first payload from a first format to a second format; and a second digital circuit configured to: receive the first numerical data from the first digital circuit and second numerical data; and perform a first compute operation with the first and second numerical data as input; wherein the first processor is configured to return a second packet to the packet switch for egress from the second port, a second payload of the second packet including numerical data that results at least in part from the first compute operation.

## Description

### BACKGROUND

Artificial intelligence (AI) may be a field of science concerned with building machines that can reason, learn, and act in a manner that would normally require human intelligence or that involves data having a scale exceeding what humans can analyze. Machine learning (ML) may be enabling a machine to autonomously learn and improve without being explicitly programmed. Deep learning may be a type of machine learning that uses artificial neural networks to process and analyze information. Various examples are described herein in the context of machine learning, which can include deep learning, but which are not meant to exclude any other form of AI.

An ML model may be a set of algorithms for machine learning. For example, an ML model can be trained on data to produce estimates about data patterns. The data pattern estimates can be used to make predictions, make classifications, etc. for input data. In machine learning, training may be a process evaluating the data pattern estimates against known data patterns using an error function and adjusting parameters of the model to minimize the error function. Distributed learning may be enabling a system (e.g., multiple machines) to implement an ML model by dividing the ML model into local models and a global model. In a distributed learning system, training data can be distributed to multiple local machines from a central machine, the training data can be used to train local models at the local machines, and the results of the training can be aggregated and used to update a global model at the central machine. Distributed learning can use data parallelism, which may be distributing of different data sets across devices (e.g., for training or for inference), model parallelism, which may be distributing different parts of the ML model across devices, or both.

Computers may be machines used in a distributed learning system to implement the local and global models and process the data. The computers can include special-purpose hardware used for the computations referred to as hardware accelerators. Hardware accelerators can be, for example, graphics processing units (GPUs), application specific integrated circuits (ASICs), field programmable gate arrays (FPGAs), and the like, which can include circuits optimized for the types of computations used in ML models. The computers can be part of a network and can exchange information, such as computation results. For example, some computers can generate intermediate computation results using their hardware accelerators (e.g., local models) and can send the intermediate computation results to another computer over the network for aggregation (e.g., at a global model). The aggregation of intermediate computation results (also referred to as the reduction of intermediate computation results) can be performed by the central processing unit (CPU) or hardware accelerator of the computer. In this scenario, the network is only used to transfer the intermediate computation results. The receiving computer must then spend resources on receiving the intermediate results, converting formats of the results, aggregating and reducing the results, and the like before using the aggregated and reduced results (e.g., to update a global model).

### SUMMARY

In some embodiments, a data plane of a network switch can include a packet switch. The packet switch can include a first port and a second port. The data plane can include a first processor coupled to the packet switch and a control plane of the network switch. The first processor can include a first digital circuit configured to receive a first payload of a first packet ingress to the first port and convert first numerical data in the first payload from a first format to a second format. The first processor can include a second digital circuit configured to receive the first numerical data from the first digital circuit and second numerical data and perform a first compute operation with the first and second numerical data as input. The first processor can be configured to return a second packet to the packet switch for egress from the second port. The second payload of the second packet can include numerical data that results at least in part from the first compute operation.

In some embodiments, a network switch can include a control plane including a central processing unit (CPU) and a memory. The network switch can include a data plane. The data plane can include a packet switch and a first processor. The packet switch can include a first port and a second port. The first processor can be coupled to the packet switch and the control plane. The first processor can include a first digital circuit configured to receive a first payload of a first packet ingress to the first port and convert first numerical data in the first payload from a first format to a second format. The first processor can include a second digital circuit configured to receive the first numerical data from the first digital circuit and second numerical data and perform a first compute operation with the first and second numerical data as input. The first processor can be configured to return a second packet to the packet switch for egress from the second port. A second payload of the second packet can include numerical data that results at least in part from the first compute operation. The second format and the first compute operation can be selected through configuration of the first processor by the control plane.

In some embodiments, a method of processing packets in a network switch can include receiving, at a first digital circuit of a first processor coupled to a packet switch and a control plane of the network switch, a first payload of a first packet ingress to a first port of the packet switch. The method can include converting by the first digital circuit the first numerical data in the first payload from a first format to a second format. The method can include receiving, at a second digital circuit, the first numerical data from the first digital circuit and second numerical data. The method can include performing, by the second digital circuit, a first compute operation with the first and second numerical data as input. The method can include returning, from the first processor to the packet switch, a second packet for egress from a second port of the packet switch. A second payload of the second packet can include numerical data that results at least in part from the first compute operation.

### BRIEF DESCRIPTION OF THE DRAWINGS

Fig. 1 is block diagram depicting a network according to some embodiments.
Fig. 2 is a block diagram depicting a network switch according to some embodiments.
Fig. 3A is a block diagram depicting an in-network compute engine (ICE) according to some embodiments.
Fig. 3B is a block diagram depicting a packet that can be processed by an ICE instance according to some embodiments.
Fig. 4 is a flow diagram depicting a method of processing packets in a network switch according to some embodiments.
Fig. 5 is a block diagram depicting a compute unit of an ICE according to some embodiments.
Fig. 6 is a block diagram depicting a compute element according to some embodiments.
Fig. 7 is a block diagram of digital logic in a compute element of Fig. 6 according to some embodiments.
Fig. 8 is a block diagram depicting a unified multi-format (UMF) adder according to some embodiments.
Fig. 9 is a block diagram depicting a UMF multiplier according to some embodiments.
Fig. 10A is a table summarizing data handling by a UMF adder or UMF multiplier according to some embodiments.
Fig. 10B is a table summarizing data handling by a UMF adder or UMF multiplier according to other embodiments.
Fig. 11 is a block diagram depicting a convert unit of an ICE according to some embodiments.
Fig. 12 is a table that summarizes the operation of a convert unit of Fig. 11 according to some embodiments.
Fig. 13 is a block diagram depicting a UMF converter according to some embodiments.
Fig. 14 is a table summarizing format conversion for convert elements according to some embodiments.
Fig. 15A is a block diagram depicting an ICE instance according to some embodiments.
Fig. 15B is a block diagram depicting another ICE instance according to some embodiments.
Fig. 15C is a block diagram depicting another ICE instance according to some embodiments.
Fig. 16A is a block diagram depicting an ICE cluster according to some embodiments.
Fig. 16B is a block diagram depicting another ICE cluster according to some embodiments.
Fig. 16C is a block diagram depicting another ICE cluster according to some embodiments.
Fig. 16D is a block diagram depicting another ICE cluster according to some embodiments.

### DETAILED DESCRIPTION

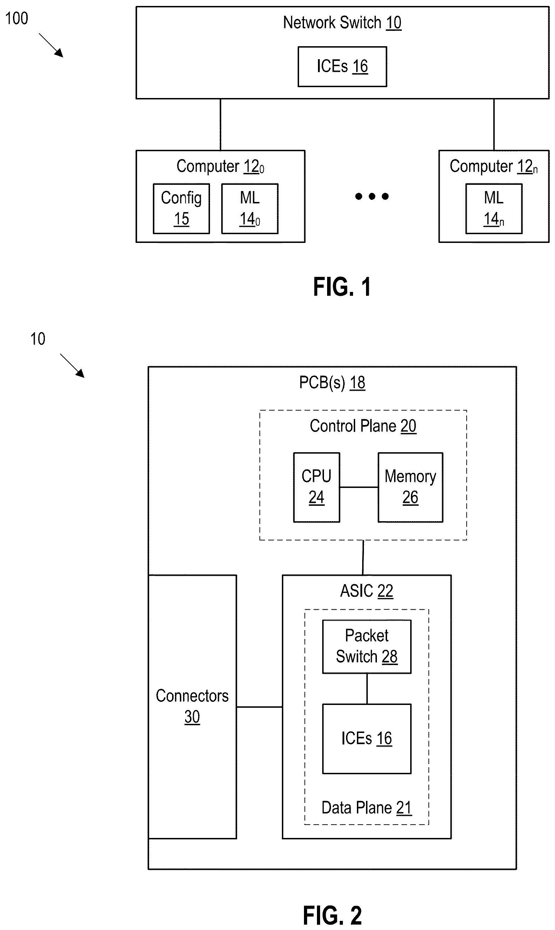

Fig. 1 is a block diagram depicting a network 100 according to some embodiments. A network may be a combination of devices and their connecting links. The devices of network 100 can include computers 12₀...12ₙ (where n is an integer greater than one) and a network switch 10. A computer may be a device that can store and process digital data. A network switch may be a device (e.g., a special-purpose computer) that connects other devices of a network (e.g., other computers) using switching to receive and forward data. Computers 12₀...12ₙ can be coupled to network switch 10 via wired, wireless, optical, or the like connecting links known in the art. Computers 12₀...12ₙ can execute software, including ML software 14₀...14ₙ. Software may be instructions that can program hardware, e.g., a processor, to operate on digital data. ML software may be software for implementing an ML model.

Digital data may be numbers each represented by a finite number of digits. Computers can represent digital data as binary numbers represented by a finite number of binary digits (bits). Digital data can have different interpretations. Control data may be digital data used to control, configure, manipulate, etc. a system or component thereof (e.g., a machine or software). Input data may be digital data input to a system or component thereof. Output data may be digital data output by a system or component thereof. Packet data may be digital data in a packet. Payload data may be digital data in a payload of a packet. Header data may be digital data in a header of a packet. Numerical data may be digital data representing numbers. An operand may be numerical data input to an operation. An operation result ("result") may be numerical data resulting from an operation on operands. Numerical data can have a format. The format of numerical data may be the manner in which numbers are represented. A format may specify a number of bits representing a number. A format may specify the type of number, such as integer versus floating-point. A format may specify a precision of a number (e.g., how many digits on either side of the decimal point). Other types of digital data may be defined below with respect to the embodiments.

In some embodiments, MLₖ in computer 12ₖ (k ∈ {1, 2, ..., n}) can generate intermediate computation results. In the context of an ML model, intermediate computation results may be digital data that results from partial computation. For example, MLₖ can be local models of a distributed learning system. Local models use only a portion of the training data, a portion of the inference data, a portion of the ML model, etc. and hence the computations of a local model output intermediate computation results. ML₀ in computer 12₀ can be configured to receive aggregated computation results from computers 12₁...12ₙ. For example, ML₀ can implement the global model of the distributed learning system. Aggregated computation results may be digital data that results from a mathematical combination of intermediate computation results. ML₀ can use the aggregated computation results to update the global model, for example. ML₀ in computer 12₀ can also send back the reduced results or the updated global model to computer 12ₖ for processing by MLₖ.

In some embodiments, network switch 10 can include in-network compute engines (ICEs) 16. A processor may be a circuit that can process digital data. A processor can be specific-purpose, e.g., can include digital circuits implementing fixed-function logic, as opposed to general-purpose, e.g., a processor that can execute software in a fetch-decode-execute model. A digital circuit may be a circuit that processes digital signals that transmit digital data. An ICE may be a processor that is specific-purpose and can process packets having numerical data, transmitted from devices over a network, within a network switch. An ICE 16 can perform computations on numerical data in packets received by network switch 10. Embodiments of an ICE 16 and its digital circuits are described below.

MLₖ in computer 12ₖ (k ∈ {1, 2, ..., n}) can send intermediate computation results towards computer 12₀ executing ML₀ through network switch 10. Computer 12₀ can execute configuration software ("config 15") that can interact with network switch 10 and provide control data for configuring ICEs 16. Network switch 10 can forward the intermediate computation results to ICEs 16 as configured for processing, which can include aggregation and reduction of the intermediate computation results into aggregated and reduced computation results. Network switch 10 can then forward the aggregated and reduced computation results to computer 12₀ for processing by ML₀. Thus, intermediate computation results generated by local models of a distributed learning system can be aggregated and reduced in-network (e.g., by network switch 10) during transmission to a destination (e.g., the global model). This obviates the need for the global model (e.g., ML₀ in computer 12₀) to perform the aggregation and reduction process itself, conserving resources of computer 12₀. In some embodiments, network switch 10 can forward and broadcast the aggregated and reduced computation results back to one or more computers 12ₖ for processing by MLₖ.

Operation of in-network computation for ML applications using ICEs 16 can be understood with reference to the following example. One example ML model can be a neural network (also referred to as an artificial neural network), which may be a model having linked processing nodes that simulate function of the human brain. A neural network can include node layers having an input layer, one or more hidden layers, and an output layer. Each node (e.g., artificial neuron) can connect to at least one other node and the connections between nodes can have weights. The weights can determine the strength of connections between nodes. A node can receive one or more inputs (e.g., from weighted connections), perform a computation, and produce an output. A node can apply an activation function to computation and the output of a node can be considered as its activation. Activations can be passed to other nodes through the weighted connections. Nodes can also have biases that can adjust the threshold of the activation functions. The weights and biases can be the parameters of the model that comprises the neural network. Training of a neural network can include updating the weights and biases to minimize a loss function using gradients. A gradient may be measurements of the change in parameters with respect to a change in a function of the parameters. In mathematical terms, gradient can be computed with a partial derivative of a function with respect to the parameters. For example, for a function f(θ), where θ represents parameters of a machine learning model, the gradient ∇f(θ) can be a vector including the partial derivatives of f with respect to each parameter in θ. The function f can be a loss function. A loss function may be a function that measures the difference (e.g., error) between outputs of a machine learning model (also referred to as predicted outputs) and target outputs (also referred to as actual outputs).

In some embodiments, a distributed learning system can use data parallelism, model parallelism, or both. MLₖ in computer 12ₖ (k ∈ {1, 2, ..., n}) can each be a local model comprising all or a portion of a neural network. ML₀ in computer 12₀ can be a global model comprising the neural network. For training, ML₀ can send training data to each MLₖ. Each MLₖ can perform training to generate gradients and update parameters for the respective local model. The gradients can be intermediate computation results, as the gradients were generated using only a portion of the training data and/or using a portion of the model. The updated parameters can be intermediate computation results, as the parameters were trained using only a portion of the training data and/or using a portion of the model. Each MLₖ can send its gradients/updated parameters towards ML₀ in computer 12₀ through network switch 10. Config 15 can send control data to network switch 10 for configuring ICEs 16 to aggregate and reduce intermediate computation results received from computers 12₁...12ₙ. ICEs 16 as configured can, for example, aggregate and reduce gradients or parameters to generate aggregated and reduced computation results. ICEs 16 as configured can forward the aggregated and reduced gradients/parameters to ML₀, which can be used to update the global model. The above process is described with respect to back-propagation in training with data parallelism. With model parallelism, similar aggregation and reduction can be performed for forward-propagation of training or for inference. Local models can locally generate intermediate computation results. ICEs 16 can be configured to aggregate and reduce the local computation results to generate the aggregated and reduced computation results, which can then be forwarded to a destination. In some embodiments, network switch 10 can forward and broadcast the aggregated and reduced computation results back to one or more computers 12ₖ for processing by MLₖ.

Fig. 2 is a block diagram depicting network switch 10 according to some embodiments. Network switch 10 can include a control plane 20 and a data plane 21. A data plane of a network switch may be circuits for processing and forwarding network traffic ("traffic"). Traffic may be network packets transmitted over time. A network packet may be a unit of data transmitted in a network using one or more protocols. For example, network packets can be transmitted by the devices on the network using the layered protocols of the Open Systems Interconnection (OSI) model, which is well known in the art. Network packets can have variable lengths (e.g., a variable number of bytes). Data plane 21 can process network packets into smaller, fixed-size units of data for internal communication among its circuits (referred to as cells). A cell may be a unit of data transmitted within a network switch. Packet, as used herein, can be a network packet or a cell. A packet can include a header and a payload. A payload of a packet may be arbitrary digital data. A header of a packet may be control data, e.g., control data for protocol(s). A header can include a stack or multiple layers of headers. A control plane of a network switch may be circuits for controlling the data plane (e.g., building and maintaining the forwarding and routing tables used by the data plane).

Control plane 20 can include a central processing unit (CPU) 24 and a memory 26. A CPU may be a device that can be programmed by instructions to process digital data. Memory may be a device that can store digital data. CPU 24 can execute software stored in memory 26 to control data plane 21. Data plane 21 can include packet switch 28 and one or more ICEs 16. A packet switch may be circuits configured to process and forward network packets. Packet switch 28 can include, for example, physical interfaces (physical ports) that have transceivers for sending and receiving electrical signals, ingress logic for processing incoming network packets (e.g., including packet-to-cell segmentation), a switch fabric for transmitting packets among the physical ports, memories for storing packets, egress logic for processing outgoing network packets (e.g., including cell-to-packet reassembly), and the like, each of which is known in the art. Packet switch 28 can be coupled to ICEs 16. Packet switch 28 and ICEs 16 can be circuits of an integrated circuit (IC), such as an application specific integrated circuit (ASIC) 22. An IC may be an electrical device formed on a semiconductor substrate. An ASIC may be an IC customized for particular function(s). ASIC 22 can be customized for the particular functions performed by packet switch 28 and ICEs 16. ASIC 22, CPU 24, and memory 26 can be electrically and mechanically mounted to one or more printed circuit boards (PCBs) 18. A PCB may be a well-known structure for mechanically securing and electrically connecting electrical devices. PCB(s) 18 can include connectors 30 coupled to ASIC 22. ASIC 22 can send and receive signals to and from network through connectors 30.

In operation, a device on the network can send packets to control plane 20 with control data for the purpose of configuring data plane 21. Such configuration can include configuration of ICEs 16. An ICE 16 can have various configurable aspects and an ICE 16 that is configured may be referred to as an ICE instance. Such configuration can include associating a set of ports with an ICE 16. A port may be an interface recognized by a network switch as a point of ingress for network packets, egress for network packets, or both. Ingress traffic may be traffic received at a port of a network switch from another device. Egress traffic may be traffic transmitted by a port of a network switch towards another device. A port may be a physical port (e.g., a physical interface of the network switch) or a logical (virtual) port. A logical (or virtual) port may be a software-defined interface (e.g., defined by control plane 20) of a network switch. Logical ports can include, for example, virtual local area network (VLAN) interfaces, link aggregation groups (LAGs), and the like each known in the art. Packet switch 28 can forward network traffic received by some of the ports to an ICE instance. The ICE instance can process the numerical data in the ingress traffic (e.g., aggregation and reduction of intermediate computation results as discussed above). The ICE instance can return the network traffic to packet switch 28 for forwarding to others of the ports, where the numerical data of the return traffic can include aggregated and reduced computation results.

In some embodiments, ICEs 16 can be configured to manipulate packet processing performed by packet switch 28 by being in-line with such packet processing. For example, packet switch 28 can receive two network packets at two ports. ICEs 16 can be configured such that the packet processing of packet switch 28 passes the two network packets to ICEs 16, ICEs 16 process the two packets and to generate a result packet, which is then passed back to the packet processing of packet switch 28. Further, ICEs 16 can improve an underlying technology of the distributed learning system by aggregating and reducing intermediate computation results in-network at the network switch, obviating the need for the destination to spend resources on the aggregation and reduction.

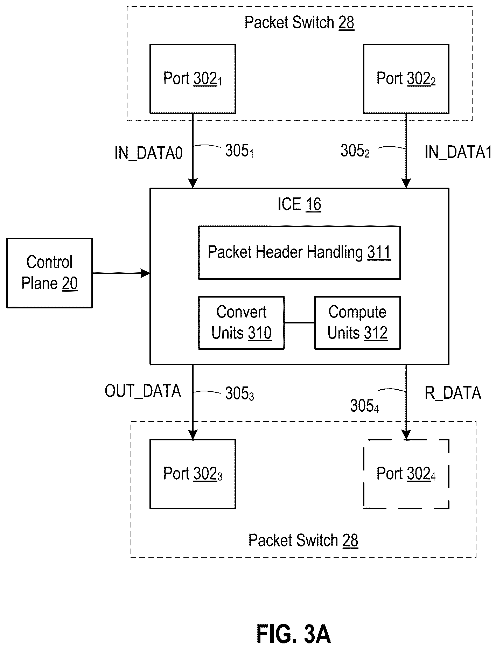

Fig. 3A is a block diagram depicting an ICE 16 according to some embodiments. ICE 16 is shown in context with packet switch 28 and control plane 20. ICE 16 can include interfaces 305₁...305₄. An interface of a device may be a point of input, output, or input and output. Interfaces 305₁ and 305₂ can be points of input to ICE 16 (input interfaces). Interfaces 305₃ and 305₄ can be points of output from ICE 16 (output interfaces). Control plane 20 can associate ports of packet switch 28 to interfaces 305₁...305₃ and optionally interface 305₄. In the example, a port 302₁ can be associated with input interface 305₁, a port 302₂ can be associated with input interface 305₂, and a port 302₃ can be associated with output interface 305₃. ICE 16 can receive first packet data from packet switch 28 that was ingress to port 302₁ (referred to as IN_DATA0) and second packet data from packet switch 28 that was ingress to port 302₂ (referred to as IN_DATA1). ICE 16 can supply packet data to packet switch 28 for egress from port 302₃ (referred to as OUT_DATA). ICE 16 can perform computations using first numerical data in IN_DATA0 and second numerical data in IN_DATA1 as operands to generate third numerical data as results in OUT_DATA. Packet data ingress to port 302₁ can be from a device on the network (e.g., a computer supplying intermediate computation results) or from another ICE instance in an ICE cluster (discussed further below). Likewise, packet data ingress to port 302₂ can be from a device on the network or from another ICE instance in an ICE cluster. Port 302₃ can transmit packet data towards a device on the network (e.g., a computer collecting aggregated computation results). In some configurations, control plane 20 can associate output interface 305₃ with multiple ports 302. ICE 16 can supply packet data to packet switch 28, and packet switch 28 can broadcast packet data for egress from multiple ports, with each of these egress ports transmitting packet data towards a device on the network.

In some configurations, control plane 20 can associate output interface 305₄ with a port 302₄. ICE 16 can supply packet data to packet switch 28 for transmission by port 302₄ (referred to as R_DATA). Fourth numerical data in R_DATA can be results of intermediate computations performed by ICE 16 (referred to as reduced data), discussed further below. Port 302₄ can transmit packet data to another ICE instance in an ICE cluster (e.g., another ICE instance in network switch 10 or another network switch). Control plane 20 can configure ICE 16 to supply only OUT_DATA, only R_DATA, or both to packet switch 28. In some configurations (shown below), R_DATA output from ICE 16 can be fed back as input to ICE 16.

ICE 16 can include convert units 310 and compute units 312. A convert unit may be digital logic configured to convert the format of numerical data. Various formats are discussed below. A compute unit may be digital logic configured to perform computations on numerical data. Digital logic may be a digital circuit that can be defined by its input, its function(s), and its output. Digital logic as used herein comprises circuits (e.g., logic gates formed from transistor circuits, digital circuit formed from logic gates, etc.). Digital logic as used herein does not encompass software or abstract representations. Some embodiments of convert units 310 and compute units 312 are described below. Convert units 310 and compute units 312 can process payload data and the numerical data included in the payload data. ICE 16 can include digital logic for passing header data through from input to output ("packet header handling 311"). ICE 16 can receive control data supplied by control plane 20, packet switch 28, or both. The control data can configure ICE 16 into a specific ICE instance (discussed below), and can specify conversion operations, compute operations, numerical data formats, rounding modes, packet control information (e.g., start of packet, end of packet, payload offset, byte count, etc.).

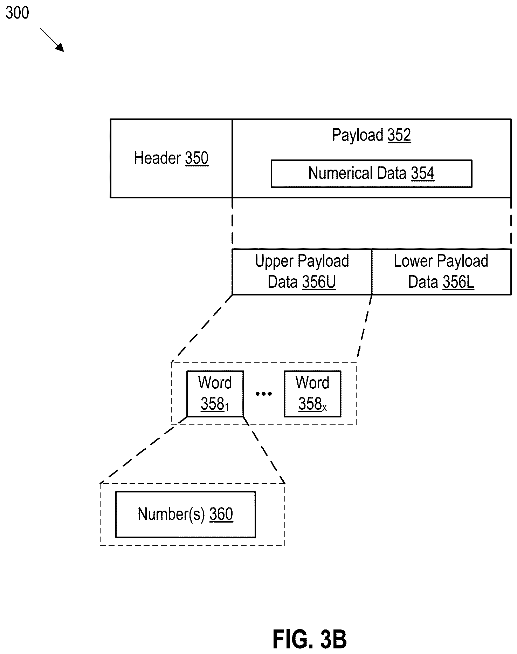

Fig. 3B is a block diagram depicting a packet 300 that can be processed by an ICE instance according to some embodiments. Packet 300 can include a header 350 and a payload 352. Header 350 can include a stack or multiple layers of headers. Payload 352 can include numerical data 354. Numerical data 354 can be part of one or both of upper payload data 356U and lower payload data 356L. Payload 352 can have a width, which is defined in terms of a number of bytes (where a byte is eight bits). For example, some payloads can have widths of 4N bytes, where N is integer greater than one. Other payloads described herein can have widths of 8N bytes. Upper payload data 346U and lower payload data 356L can each be half the width of payload 352. For 4N-byte payloads, upper payload data 356U and lower payload data 356L each can be 2N bytes wide. For 8N-byte payloads, upper payload data 356U and lower payload data 356L each can be 4N bytes wide. Numerical data 354 can have an alignment within payload 352, such as aligning to the most significant bit (MSB) (e.g., the bit adjacent header 350) or the least significant bit (LSB) (e.g., the bit opposite-most from the MSB). In various examples, MSB alignment can be assumed. Thus, 2N-byte numerical data can be in upper payload data 356U of a 4N-byte payload (MSB aligned). In another example, 4N-byte numerical data can be in upper payload data 356U of an 8N-byte payload (MSB aligned).

Each of upper payload data 356U and lower payload data 356L can include a set of words 358₁...358ₓ, where x is an integer depending on the width of payload 352 and the width of a word. In various examples herein, the word width can be 32-bits (4 bytes). Thus, for a 4N-byte payload with 4-byte words, x can be N/2. For an 8N-byte payload with 4-byte words, x can be N. Each word 358₁...358ₓ can include one or more numbers 360 of numerical data 354. The amount of numbers in each word can depend on the number of bits representing each number. For 32-bit numbers, each word can have one number. For 16-bit numbers, each word can have two numbers. For 8-bit numbers, each word can have four numbers. A packed integer word may be a word that has multiple integer numbers arranged therein (e.g., a 4-byte word having two 16-bit integers or four 8-bit integers). A packed floating-point word may be a word that has multiple floating-point numbers arranged therein (e.g., a 4-byte word having two numbers in 16-bit floating-point format or four numbers in 8-bit floating-point format). A number 360 can include multiple bytes. The order of the bytes in a number 360 can be either big-endian or little-endian.

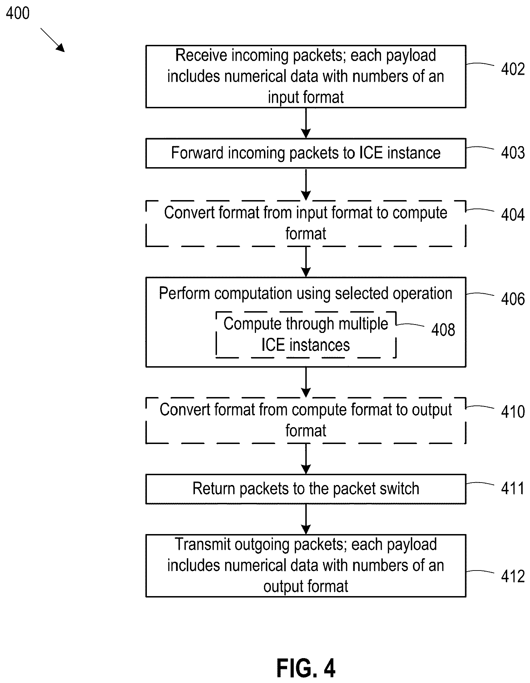

Fig. 4 is a flow diagram depicting a method 400 of processing packets in a network switch according to some embodiments. Method 400 begins at step 402, where network switch 10 receives incoming packets. The payloads of the packets include numerical data. The numbers in the numerical data can be in an input format. At step 403, packet switch 28 in network switch 10 can forward the incoming packets to a configured instance of an ICE 16 (ICE instance). At optional step 404, the ICE instance can convert the format of the numerical data from the input format to a compute format. In some embodiments, the format conversion can be an up-conversion (e.g., increasing the number of bits per number). In other embodiments, the format conversion can be a flat conversion (e.g., converting something other than the bits per number). Step 404 can be performed on all incoming packets or some incoming packets (e.g., some incoming packets can have numerical data already in the compute format). Step 404 can be omitted and there can be no conversion of the format of the incoming numerical data (e.g., all of the incoming numerical data can already be in the compute format).

At step 406, the ICE instance can perform computation using a selected operation. For example, an operation can be selected from a set of operations, which can include a sum operation, a sum and scale operation, a minimum operation, and a maximum operation. A sum operation may be a sum of operands to generate a result. A sum and scale operation may be a sum of operands, the result of which is multiplied by a scalar value to generate a result. A minimum operation may be determining the minimum of operands. A maximum operation may be determining a maximum of operands. In some embodiments, the ICE instance may be part of an ICE cluster comprising multiple connected ICE instances. In such case, at step 408, the computation in step 406 can be performed across multiple ICE instances using one or more selected operations. Some embodiments of ICE clusters are described below.

At optional step 410, the ICE instance can convert the format of the resulting numerical data from step 406 from the compute format to an output format. For example, the conversion can be a down-conversion (e.g., the output format can have less bits per number than the compute format). Step 410 is optional and can be omitted (e.g., the packets can be returned to packet switch 28 for transmission without format conversion of the numerical data). At step 411, the ICE instance can return the packets to packet switch 28. At step 412, packet switch 28 can transmit outgoing packets. Each payload can include numerical data with numbers of an output format (or compute format if no conversion is performed at step 410).

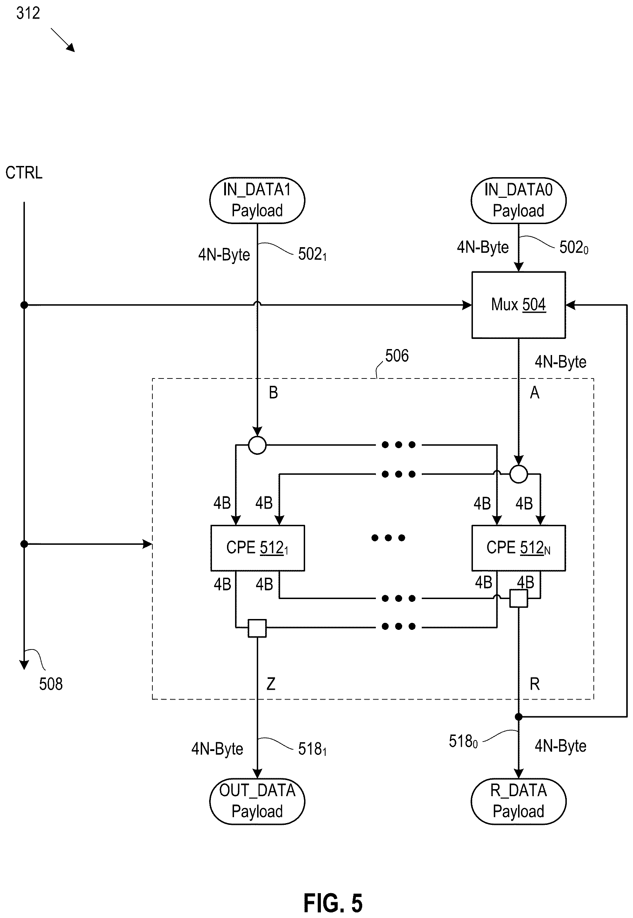

Fig. 5 is a block diagram depicting a compute unit 312 of an ICE 16 according to some embodiments. Compute unit 312 can include input interfaces 502₀ and 502₁, a multiplexer 504, digital logic 506, a control interface 508, and output interfaces 518₀ and 518₁. A control interface may be an interface for receiving and/or transmitting control data. A multiplexer may be a digital circuit that can select among its inputs for coupling to its output based on control data. An input of multiplexer 504 can be coupled to input interface 502₀. An output of multiplexer 504 can be coupled to an input of digital logic 506. Input interface 502₁ can be coupled to another input of digital logic 506. An output of digital logic 506 can be coupled to output interface 518₀. Another output of digital logic 506 can be coupled to output interface 518₁. Another input of multiplexer 504 can be coupled to control interface 508. Another input of digital logic 506 can be coupled to control interface 508. Another input of multiplexer 504 can be coupled to output interface 518₀.

Multiplexer 504 can connect its output to either input interface 502₀ or output interface 518₀ based on control data from control interface 508. Input interface 502₀ can receive numerical data from IN_DATA0 and input interface 502₁ can receive numerical data from IN_DATA1. Output interface 518₁ can supply numerical data for OUT_DATA. Output interface 518₀ can supply numerical data for R_DATA. Thus, the first input of digital logic 506 can receive either numerical data from IN_DATA0 or numerical data of R_DATA, and a second input of digital logic 506 can receive numerical data from IN_DATA1.

Digital logic 506 can receive first numerical data and second numerical data as input. Digital logic 506 can perform computation on the first numerical data and the second numerical data to generate third numerical data and optionally fourth numerical data. The computation can include arithmetic operations using numbers in the first and second numerical data as operands and generate numbers of the third numerical data and optionally the fourth numerical data as results of those operations. Digital logic 506 can supply the third numerical and optionally the fourth numerical data as output. Digital logic 506 can be configured by control data on control interface 508. Example configuration can include, for example, the type of operation performed, the format used by the operands, and whether the fourth numerical data is generated. The first numerical data can be payload data from packets of IN_DATA0 received at an input A of digital logic 506. The second numerical data can be payload data from packets in IN_DATA1 received at input B of digital logic 506. The third numerical data can be payload data of packets in OUT_DATA supplied by output Z of digital logic 506. The fourth numerical data can be payload data of packets in R_DATA supplied by output R of digital logic 506. In embodiments, the width of the numerical data at inputs A and B and supplied by outputs Z and R can be 4N bytes.

Digital logic 506 can include compute elements (CPEs) 512₁...512_{N}. In the example, each input A and B can receive 4N-byte numerical data and each output Z and R can supply 4N-byte numerical data. Each CPE 512₁...512_{N} can include two 4-byte inputs and two 4-byte outputs. CPE 512ₖ can receive a kth 4-byte word from input A (operand Aₖ) and a kth 4-byte word from input B (operand Bₖ), where k ∈ {1...N}. CPE 512ₖ can supply a kth 4-byte word from output Z (result Zₖ) and a kth 4-byte word from output R (result Rₖ), where k ∈ {1...N}. Open circles in Fig. 5 represent data splits (e.g., 4N-byte value to N 4B-values). Open squares in Fig. 5 represent data concatenations (e.g., N 4B-values to 4N-byte value). Compute element may be digital logic configured to perform arithmetic operations on numbers, as described further below. The type of operation performed by each CPE 512₁...512_{N} can be selected using control data from control interface 508.

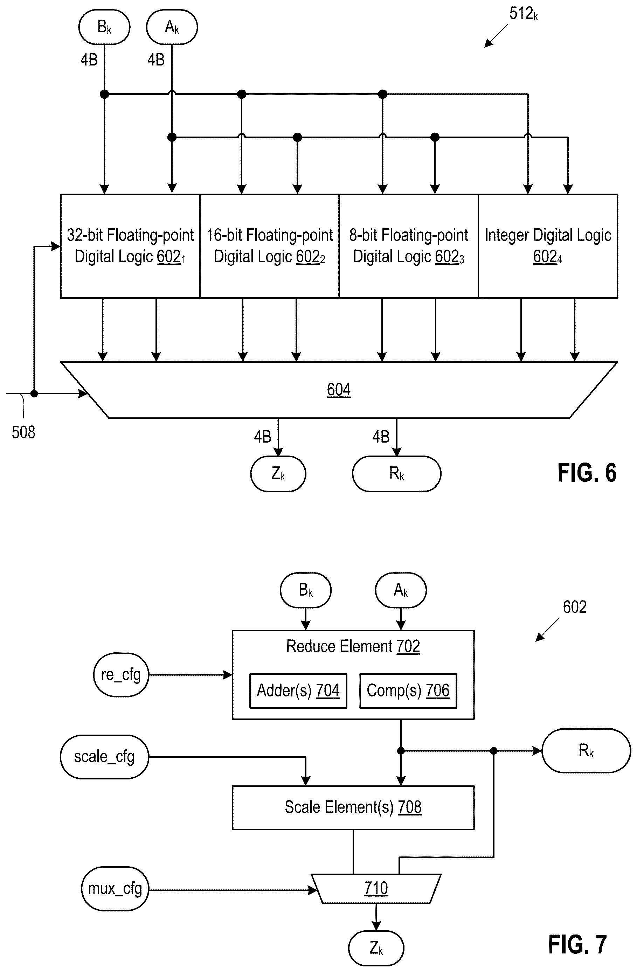

Fig. 6 is a block diagram depicting a compute element according to some embodiments. A CPE 512ₖ (k ∈ {1...N}) can include floating-point digital logic 602₁, 602₂, and 602₃, integer digital logic 602₄, and a multiplexer 604. CPE 512ₖ can receive two operands Aₖ and Bₖ. Each of operand Aₖ and Bₖ can be a 4-byte word. An output of multiplexer 604 can supply an operation result Zₖ and an operation result Rₖ, each of which can be a 4-byte word. Each digital logic 602₁...602₄ can have inputs to receive operands Aₖ and Bₖ and outputs to supply results. The outputs of each digital logic 602₁...602₄ can be coupled to respective inputs of multiplexer 604. Multiplexer 604 can receive control data from control interface 508 to select the outputs from one of digital logic 602₁...602₄. That is, one output from a selected digital logic is output from CPE 512ₖ as Zₖ and the other output from the selected digital logic is output from CPE 512ₖ as Rₖ.

Digital logic 602₁ can perform floating-point operations using numbers in 32-bit floating-point format. A floating-point format may be a format that can represent both an integer-part and a fractional part of a number. A float-point format can include one bit for the sign, some number of bits for an exponent, and some number of bits for the fraction (referred to as the mantissa or significand). The sign bit determines if the number is positive or negative. The exponent can control the range of values (how large or small the number can be). The significand can encode the significant bits of the number and can control the precision (e.g., how many significant figures can be accurately represented). A 32-bit floating point format can include 32 bits for representing a number. Each 4-byte operand Aₖ and Bₖ can include one number represented in 32-bit floating point format. Each output of digital logic 602₁ can supply a 4-byte result being one number represented in 32-bit floating point format. An example 32-bit floating-point format is known as FP32, which includes one sign bit, eight exponent bits, and a 23-bit significand as is well-known in the art.

Digital logic 602₂ can perform operations using numbers in a 16-bit floating point format. A 16-bit floating point format can include 16 bits for representing a number. Each 4-byte operand Aₖ and Bₖ can include two numbers represented in 16-bit floating point format. Example 16-bit floating-point formats include FP16 and BF16, each of which is well-known in the art. FP16 can include one sign bit, five exponent bits, and a 10-bit significand. BF16 can include one sign bit, eight exponent bits, and a 7-bit significand. Digital logic 602₂ can perform two 16-bit floating-point operations in parallel (sometimes referred to as packed arithmetic).

Digital logic 602₃ can perform operations using numbers in an 8-bit floating-point format. An 8-bit floating-point format can include 8 bits for representing a number. Each 4-byte operand Aₖ and Bₖ can include four numbers represented in 8-bit floating-point format. Example 8-bit floating-point formats include various forms of FP8 known in the art, such as E5M2 and E4M3. E5M2 can include one sign bit, five exponent bits, and two mantissa bits. E4M3 can include one sign bit, four exponent bits, and three mantissa bits. Digital logic 602₃ can perform four 8-bit floating-point operations in parallel.

Digital logic 602₄ can perform operations using numbers in integer format, including 32-bit, 16-bit, and 8-bit integer formats. Each 4-byte operand Aₖ and Bₖ can include one 32-bit integer, two 16-bit integers, or four 8-bit integers. Digital logic 602₄ can perform one 32-bit integer operation, two 16-bit integer operations in parallel, or four 8-bit integer operations in parallel.

Fig. 7 is a block diagram of digital logic 602 in a compute element according to some embodiments. Each digital logic 602₁...602₄ shown in Fig. 6 can have a structure as shown for digital logic 602 in Fig. 7. Digital logic 602 can include a reduce element 702 and scale element(s) 708. Reduce element 702 can include adder(s) 704 and comparator(s) 706. The number of adders 704 and comparators 706 in reduce element 702, and the number of scale elements 708, can depend on the number of parallel operations performed by digital logic 602. For 32-bit operations, digital logic 602 can include one adder 704, one comparator 706, and one scale element 708. For 16-bit operations, digital logic 602 can include two adders 704, two comparators 706, and two scale elements 708 operating in parallel. For 8-bit operations, digital logic 602 can include four adders 704, four comparators 706, and four scale elements 708 operating in parallel.

An adder may be digital logic that can compute a sum of its inputs and supply the sum as its output. A comparator may be digital logic that can compare its inputs and supply a result of the comparison as its output (e.g., a minimum of the inputs or a maximum of the inputs). A scale element may be digital logic that can compute a product of its inputs and supply the product as its output (e.g., a multiplier). Adder(s) 704 and comparator(s) 706 can be parts of reduce element 702, which can perform reduction operations in a distributed learning system.

Inputs of reduce element 702 can receive operands Aₖ and Bₖ (e.g., 4-byte words). Another input of reduce element 702 can receive configuration data from control interface 508 (shown as re_cfg). The configuration data can select whether reduce element 702 is performing addition using adder(s) 704 or comparison using comparator(s) 706. Adder(s) 704 can perform sum operations on number(s) in Aₖ and number(s) in Bₖ. Comparator(s) 706 can perform comparison operations on number(s) in Aₖ and number(s) in Bₖ. An output of reduce element 702 can be coupled to input(s) of scale element(s) 708. Other input(s) of scale element(s) 708 can receive a multiplicand in the control data on control interface 508 (shown as scale _cfg). Each scale element 708 can multiply the multiplicand and an output of a respective adder 704. Output(s) of scale element(s) 708 can be coupled to an input of a multiplexer 710. The output of reduce element 702 (e.g., outputs(s) of adder(s) 704 or output(s) of comparator(s) 706) can be coupled to other input(s) of multiplexer 710. Another input of multiplexer 710 can receive control data on control interface 508 (shown as mux_cfg). The output of multiplexer 710 can supply the result Zₖ. Multiplexer 710 can be controlled to select either output(s) of scale element(s) 708 or the output of reduce element 702 as the result Zₖ. The output of reduce element 702 can be supplied as the result Rₖ.

Reduce element 702 can be configured to perform reduce operations in a distributed learning system (e.g., aggregation and reduction of intermediate computation results). Example reduce operations include a sum operation, a sum and scale operation, a minimum operation, and a maximum operation. Reduce element 702 can be configured to use adder(s) 704 for a sum operation or comparator(s) 706 for a minimum/maximum operation. The result supplied by reduce element 702 can be reduced data (e.g., two intermediate results summed to generate a sum or compared to generate a minimum/maximum result). Digital logic 602 can be configured to scale the reduced data by a scalar value. The output Zₖ of digital logic 602 can be the reduced data or the reduced data as scaled. The output Rₖ can be the reduced data. The output Rₖ from logic 602 across instances of CPEs can provide the numerical data for R_DATA discussed above. Reduced data can omit scaling and can be used by other ICE instances in reduction operations before a final ICE instance can perform scaling if desired.

For some instances of digital logic 602, adders 704 and scale elements 708 can be configured to support multiple formats for the input operands. For example, for 16-bit floating-point operations, adders 704 and scale elements 704 can support both FP16 and BF16 formats. For 8-bit floating-point operations, adders 704 and scale elements 704 can support E5M2 and E4M3 formats for FP8 numbers. In some embodiments, for digital logic 602 that supports multiple input formats, adders 704 can be unified multi-format (UMF) adders, and scale elements 704 can be UMF multipliers, as discussed further below.

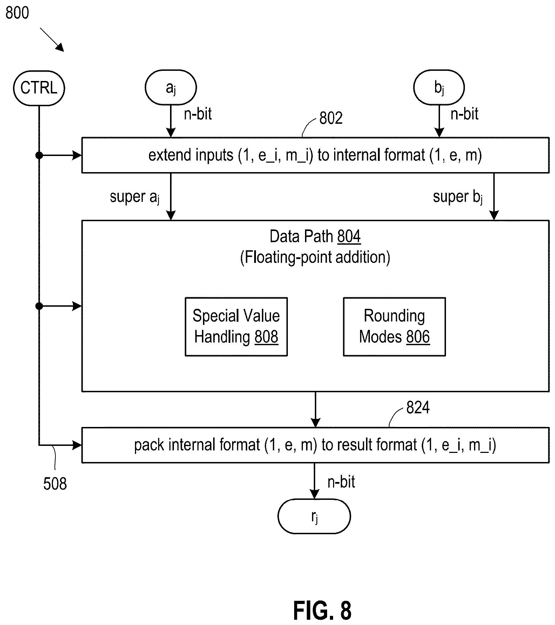

Fig. 8 is a block diagram depicting a UMF adder 800 according to some embodiments. UMF adder 800 can include digital logic 802, data path 804, and digital logic 824. Inputs of digital logic 802 can receive numbers aⱼ and bⱼ, each comprising n bits. A number aⱼ can be a jth number in the operand Aₖ discussed above, where j is an integer having a range that depends on the number (n) of bits per number. For n = 16-bit numbers, j can be 1 or 2 representing the first number or the second number, respectively, in 4-byte word Aₖ. For n = 8-bit numbers, j can be 1, 2, 3, or 4 representing the first, second, third, or fourth numbers, respectively, in 4-byte word Aₖ. Likewise, a number bⱼ can be the jth number in operand Bₖ discussed above. An output of digital logic 824 can supply a number rⱼ. A number rⱼ can be a jth number in result Rₖ discussed above.

Digital logic 802 can be configured to manipulate the format of the numbers aⱼ and bⱼ from an input format to an internal format. The input format can be an n-bit floating-point format (e.g., 16-bit or 8-bit). The input format can be expressed as (1, e_i, m_i), where there is one sign bit, e_i represents the number of exponent bits, and m_i represents the number of mantissa bits. The internal format can be expressed as (1, e, m), where there is one sign bit, e represents the number of exponent bits, and m represents the number of mantissa bits. The internal format can be a "super format," where e is the largest number of exponent bits across all supported formats and m is the largest number of mantissa bits across all supported formats. For example, UMF adder 800 can be an n = 16-bit adder that supports FP16 (1, 5, 10) and BF16 (1, 8, 7) formats. In this example, the internal format can be a (1, 8, 10) super format. In another example, UMF adder 800 can be an n = 8-bit adder that supports E5M2 (1, 5, 2) and E4M3 (1, 4, 3) FP8 formats. In this example, the internal format can be a (1, 5, 3) super format. The sign bit can be the most-significant bit (MSB) of the super format. The exponent field can be least-significant bit (LSB) aligned in the super format, with the remaining upper bits of zero if e > e_i. The mantissa field can be MSB-aligned in the super format, with the remining lower bits of zero if m > m_i. Another input of digital logic 802 can be coupled to control interface 508 to receive control data for selecting the input format from the supported input formats.

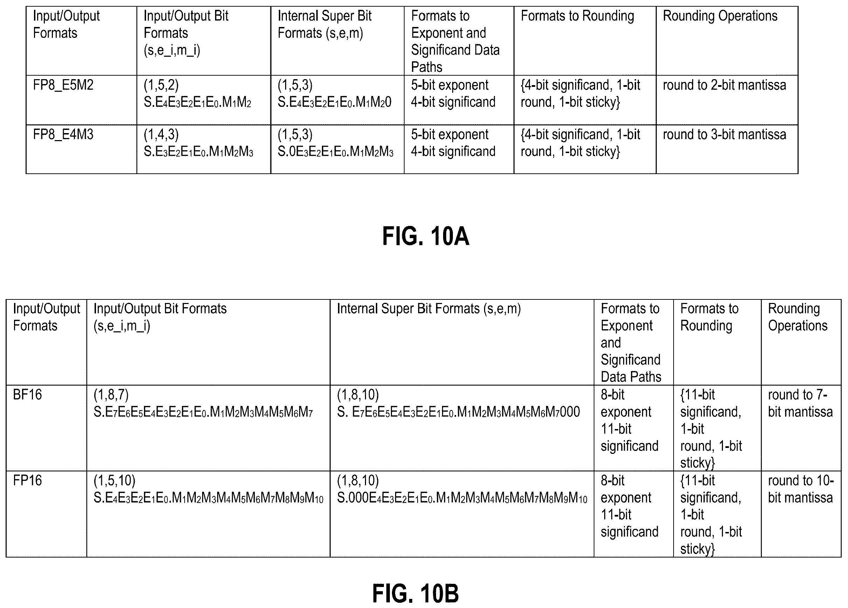

One output of digital logic 802 can supply the aⱼ in the internal format (super format) to one input of data path 804, and another output of digital logic 802 can supply the bⱼ in the internal format (super format) to another input of data path 804. Data path 804 can be digital logic configured to perform floating-point addition of input numbers in the super format. Floating-point addition can include, for example, unpacking the numbers into sign, exponent, and mantissa, aligning the exponents, adding/subtracting the mantissas, normalizing the result, adjusting the exponent, rounding the result, and packing the sign, exponent, and mantissa back into the internal format. Data path 804 can include rounding modes 806 and special-value handling 808. Data path 804 can support multiple rounding modes 806, selectable by control data on control interface 508. Data path 804 can support different special-value handling 808, selectable by control data on control interface 508. Data path 804 can include dedicated rounding modes 806 for the different supported input formats. Examples of different rounding modes 806 are shown in Figs. 10A-B. Data path 804 can include dedicated special-value handling 808 for the different supported input formats (e.g., not-a-number (NAN) handling, denormal handling, overflow handling, IEEE compliance, etc.).

An output of data path 804 can supply a result number to an input of digital logic 824 in the internal format. Another input of digital logic 824 can receive control data from control interface 508. The control data can select an output format. Digital logic 824 can convert the format of its input to the output format as selected by the control data. In the example, the output format can be the same as the input format. The output of digital logic 824 can supply the number rⱼ.

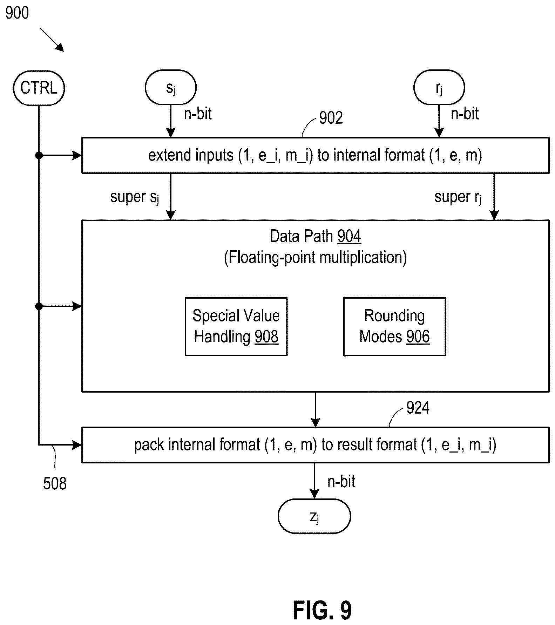

Fig. 9 is a block diagram depicting a UMF multiplier 900 according to some embodiments. UMF multiplier 900 can include digital logic 902, data path 904, and digital logic 924. Inputs of digital logic 902 can receive numbers sⱼ and rⱼ, each comprising n bits. A number sⱼ can be a jth multiplicand supplied in the control data discussed above, where j is an integer having a range that depends on the number (n) of bits per number. For n = 16-bit numbers, j can be 1 or 2 representing the first number or the second number, respectively, in 4-byte word control word. For n = 8-bit numbers, j can be 1, 2, 3, or 4 representing the first, second, third, or fourth numbers, respectively, in 4-byte control word. Likewise, a number rⱼ can be the jth number in result Rₖ discussed above. An output of digital logic 924 can supply a number zⱼ. A number zⱼ can be a jth number in result Zₖ discussed above.

Digital logic 902 can be configured to manipulate the format of the numbers sⱼ and rⱼ from an input format to an internal format. The input format can be an n-bit floating-point format (e.g., 16-bit or 8-bit). The input format can be expressed as (1, e_i, m_i), where there is one sign bit, e_i represents the number of exponent bits, and m_i represents the number of mantissa bits. The internal format can be expressed as (1, e, m), where there is one sign bit, e represents the number of exponent bits, and m represents the number of mantissa bits. The internal format can be a "super format," where e is the largest number of exponent bits across all supported formats and m is the largest number of mantissa bits across all supported formats. For example, UMF multiplier 900 can be an n = 16-bit multiplier that supports FP16 (1, 5, 10) and BF16 (1, 8, 7) formats. In this example, the internal format can be a (1, 8, 10) super format. In another example, UMF multiplier 900 can be an n = 8-bit multiplier that supports E5M2 (1, 5, 2) and E4M3 (1, 4, 3) FP8 formats. In this example, the internal format can be a (1, 5, 3) super format. The sign bit can be the MSB of the super format. The exponent field can be LSB-aligned in the super format, with the remaining upper bits of zero if e > e_i. The mantissa field can be MSB-aligned in the super format, with the remining lower bits of zero if m > m_i. Another input of digital logic 902 can be coupled to control interface 508 to receive control data for selecting the input format from the supported input formats.

One output of digital logic 902 can supply the sⱼ in the internal format (super format) to one input of data path 904, and another output of digital logic 902 can supply the rⱼ in the internal format (super format) to another input of data path 904. Data path 904 can be digital logic configured to perform floating-point multiplication of input numbers in the super format. Floating-point multiplication can include, for example, unpacking the numbers into sign, exponent, and mantissa, adding the exponents, multiplying the mantissas, normalizing the result, adjusting the exponent, rounding the result, and packing the sign, exponent, and mantissa back into the internal format. Data path 904 can include rounding modes 906 and special-value handling 908. Data path 904 can support multiple rounding modes 906, selectable by control data on control interface 508. Data path 904 can support different special-value handling 908, selectable by control data on control interface 508. Data path 904 can include dedicated rounding modes 906 for the different supported input formats. Examples of different rounding modes 906 are shown in Figs. 10A-B. Data path 904 can include dedicated special-value handling 908 for the different supported input formats (e.g., NAN handling, denormal handling, overflow handling, IEEE compliance, etc.).

An output of data path 904 can supply a result number to an input of digital logic 924 in the internal format. Another input of digital logic 924 can receive control data from control interface 508. The control data can select an output format. Digital logic 924 can convert the format of its input to the output format as selected by the control data. In the example, the output format can be the same as the input format. The output of digital logic 924 can supply the number zⱼ.

Fig. 10A is a table summarizing data handling by a UMF adder or UMF multiplier according to some embodiments. Fig. 10A relates to UMF adder 800 or UMF multiplier 900 configured to support n = 8-bit numbers having an input format selected from FP8_E5M2 or FP8_E4M3. For the input format FP8_E5M2, the format can be expressed as (1, 5, 2) or S.E₄E₃E₂E₁E₀.M₁M₂ representing the number of sign (S), exponent (E), and mantissa (M) bits. For the input format FP8_E4M3, the format can be expressed as (1, 4, 3) or S.E₃E₂E₁E₀.M₁M₂M₃. For FP8_E5M2, the internal super format can be (1, 5, 3) or S.E₄E₃E₂E₁E₀.M₁M₂0. For FP8_E4M3, the internal super format can be (1, 5, 3) or S.E₄E₃E₂E₁E₀.M₁M₂M₃. The exponent path in the data paths can handle a 5-bit exponent and the significand path in the data paths can handle a 4-bit significand (mantissa). For each of FP8_E5M2 and FP8_E4M3, the rounding format can be selected to be {4-bit significand, 1-bit round, 1-bit sticky}. For FP8_E5M2, the rounding mode can be selected to round to a 2-bit mantissa. For FP8_E4M3, the rounding mode can be selected to round to a 3-bit mantissa.

Fig. 10B is a table summarizing data handling by a UMF adder or UMF multiplier according to some embodiments. Fig. 10B relates to UMF adder 800 or UMF multiplier 900 configured to support n = 16-bit numbers having an input format selected from BF16 or FP16. For the input format BF16, the format can be expressed as (1, 8, 7) or S.E₇E₆E₅E₄E₃E₂E₁E₀.M₁M₂M₃M₄M₅M₆M₇. For the input format FP16, the format can be expressed as (1, 5, 10) or S.E₄E₃E₂E₁E₀.M₁M₂M₃M₄M₅M₆M₇M₈M₉M₁₀. For BF16, the internal super format can be (1, 8, 10) or S.E₇E₆E₅E₄E₃E₂E₁E₀.M₁M₂M₃M₄M₅M₆M₇000. For FP16, the internal super format can be (1, 8, 10) or S.000E₄E₃E₂E₁E₀.M₁M₂M₃M₄M₅M₆M₇M₈M₉M₁₀. The exponent path in the data paths can handle an 8-bit exponent and the significand path in the data paths can handle an 11-bit significand (mantissa). For each of BF16 and FP16, the rounding format can be selected to be {11-bit significand, 1-bit round, 1-bit sticky}. For BF16, the rounding mode can be selected to round to a 7-bit mantissa. For FP16, the rounding mode can be selected to round to a 10-bit mantissa.

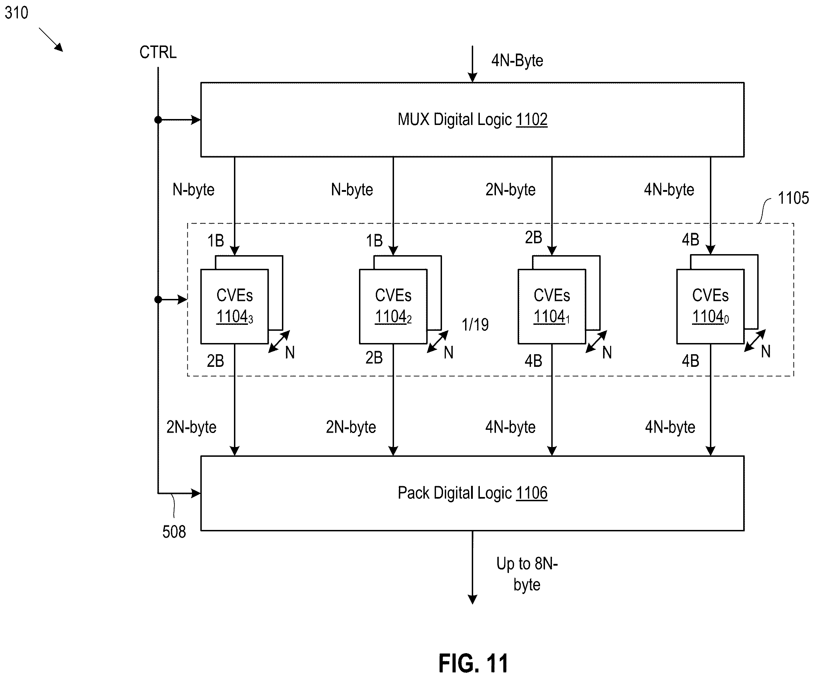

Fig. 11 is a block diagram depicting a convert unit 310 according to some embodiments. Convert unit 310 can include digital logic 1102, digital logic 1105, and digital logic 1106. Digital logic 1102 can receive an input receiving numerical data (e.g., 4N-byte numerical data). Digital logic 1106 can have an output supplying numerical data (e.g., up to 8N-byte numerical data, such as 2N-byte, 4N-byte, or 8N-byte numerical data). The input numerical data can be in an input format and the output numerical data can be in an output format. The output format can include more bits-per-number than the input format (up-conversion), less bits-per-number than the input format (down-conversion), or the same number of bits-per-number as the input format (flat conversion). Outputs of digital logic 1102 can be coupled to inputs of digital logic 1105. Outputs of digital logic 1105 can be coupled to inputs of digital logic 1106. An input of digital logic 1102 can receive control data from control interface 508. An input of digital logic 1105 can receive control data from control interface 508. An input of digital logic 1106 can receive control data from control interface 508.

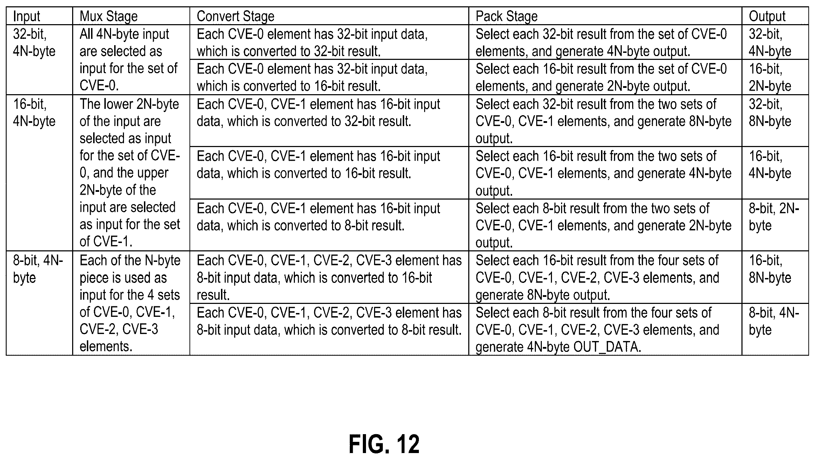

Digital logic 1105 can include digital logic 1104₀...1104₃. Each digital logic 1104ₖ can include a set of N convert elements (CVEs). A convert element may be digital logic that can receive a number in an input format and output a number in an output format that is different than the input format. Each CVE 1104₀ can include a 4-byte input (e.g., one 8-bit, 16-bit, or 32-bit operand) and a 4-byte output (e.g., one 8-bit, 16-bit, or 32-bit result). Each CVE 1104₁ can include a 2-byte input (e.g., one 8-bit or 16-bit operand) and a 4-byte output (e.g., one 8-bit, 16-bit, or 32-bit result). Each CVE 1104₂ and CVE 1104₃ can include a 1-byte input (e.g., one 8-bit operand) and a 2-byte output (e.g., one 8-bit or 16-bit result). Each CVE can be implemented using a UMF converter, as described in embodiments below. Digital logic 1102 can output four sets of inputs to digital logic 1105, e.g., a 4N-byte input to CVEs 1104₀, a 2N-byte input to CVEs 1104₁, an N-byte input to CVEs 1104₂, and an N-byte input to CVEs 1104₃. Digital logic 1106 can receive a 4N-byte output from CVEs 1104₀, a 4N-byte output from CVEs 1104₁, a 2N-byte output from CVEs 1104₂, and a 2N-byte output from CVEs 1104₃. Digital logic 1102 can perform multiplexing operations and digital logic 1106 can perform packing operations, as summarized in the table of Fig. 12. The multiplexing operations and packing operations can be controlled by respective control data on control interface 508. The configuration of CVEs in digital logic 1105 (e.g., UMF CVEs) can be controlled by control data on control interface 508.

The selectable formats of the input data can include 32-bit, 16-bit, and 8-bit floating-point formats (e.g., FP32, BF16, FP16, FP8(E5M2, E4M3)), as well as 32-, 16-, and 8-bit signed and unsigned integer formats. Up-conversion can include converting the input format to another format of twice the width (e.g., 16-bit to 32-bit, 8-bit to 16-bit). Down-conversion can include converting the input format to another format of half the width (e.g., 32-bit to 16-bit, 16-bit to 8-bit). Flat conversion can include converting the input format to another format of the same width (e.g., FP8_E5M2 to FP8_E4M3 or vice versa, BF16 to FP16 or vice versa).

Fig. 12 is a table that summarizes the operation of convert unit 310 according to some embodiments. The input can be 4N-byte numerical data with 32-bit format numbers, 4N-byte numerical data with 16-bit format numbers, or 4N-byte numerical data with 8-bit format numbers. These formats are discussed above. Digital logic 1102 can provide a multiplexing stage where: (1) for 32-bit, 4N-byte data, all 4N-byte input are selected as input for the CVEs 1104₀; (2) for 16-bit, 4N-byte data, the lower 2N-bytes of the input are selected as input for CVEs 1104₀ and the upper 2N-bytes of the input are selected as input for CVEs 1104₁; and (3) for 8-bit, 4N-byte input, each N-byte piece is used as input for the four sets of CVEs 1104₀...1104₃.

Digital logic 1105 can provide a convert stage. For 32-bit, 4N-byte input data, digital logic 1105 can perform flat conversion or down-conversion to 16 bits. For flat conversion, each CVE 1104₀ can have 32-bit input data, which is converted to 32-bit result data. For down-conversion, each CVE 1104₀ can have 32-bit input data, which is converted to 16-bit result data. Digital logic 1106 can provide a pack stage. For flat conversion, digital logic 1106 can select each 32-bit result from CVEs 1104₀ and generate a 4N-byte output (with 32-bit numbers). For down-conversion, digital logic 1106 can select each 16-bit result from CVEs 1104₀ and generate 2N-byte output (with 16-bit numbers).

For 16-bit, 4N byte input data, digital logic 1105 can perform up-conversion to 32 bits, flat conversion, or down-conversion to 8-bits. For up-conversion, each CVE 1104₀ and 1104₁ has 16-bit input data, which is converted to 32-bit result data. For flat conversion, each CVE 1104₀ and 1104₁ can have 16-bit input data, which is converted to 16-bit result data. For down-conversion, each CVE 1104₀ and 1104₁ can have 16-bit input data, which is converted to 8-bit result data. For up-conversion, digital logic 1106 can select each 32-bit result from CVEs 1104₀ and 1104₁ and generate an 8N-byte output (with 32-bit numbers). For flat conversion, digital logic 1106 can select each 16-bit result from CVEs 1104₀ and 1104₁ and generate 4N-byte output (with 16-bit numbers). For down-conversion, digital logic 1106 can select each 8-bit result from CVEs 1104₀ and 1104₁ and generate 2N-byte output (with 8-bit numbers).

For 8-bit, 4N-byte input data, digital logic 1105 can perform up-conversion to 16 bits or flat conversion to 8-bits. For up-conversion, each CVE 1104₀...1104₃ has 8-bit input data, which is converted to 16-bit result data. For flat conversion, each CVE 1104₀...1104₃ has 8-bit input data, which is converted to 8-bit result data. For up-conversion, digital logic 1106 can select each 16-bit result from CVEs 1104₀...1104₃ and generate 8N-byte output (with 16-bit numbers). For flat conversion, digital logic 1106 can select each 8-bit result from CVEs 1104₀...1104₃ an degenerate 4N-byte output (with 8-bit numbers).

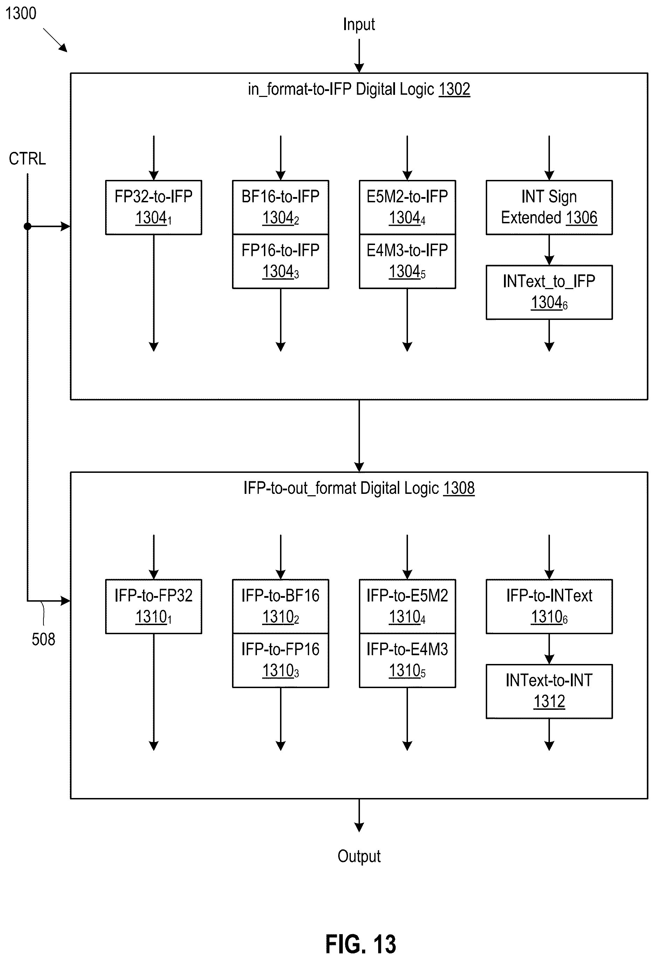

Fig. 13 is a block diagram depicting a UMF converter 1300 according to some embodiments. UMF converter 1300 can include digital logic 1302 and digital logic 1308. An input of digital logic 1302 can receive the numerical data to be converted. An output of digital logic 1308 can supply the numerical data with an output format. Digital logic 1302 can convert the format of the input from an input format to an intermediate format (IF). The intermediate format can be a super format that covers the range and precision of all the input formats. An output of digital logic 1302 can supply numerical data having the IF to an input of digital logic 1308. Digital logic 1308 can convert the numerical data having the IF to an output format. Another input of digital logic 1302 can receive control data from control interface 508. The control data can select the input format of the input data. Another input of digital logic 1308 can receive control data from control interface 508. The control data can select rounding mode and the output format.

Digital logic 1302 can convert an input format (in_format) to an IF floating-point format (IFP). Digital logic 1302 can include digital logic 1304₁...1304₆. Digital logic 1304₁ can convert numbers in FP32 to IFP. Digital logic 1304₂ can convert numbers in BF16 to IFP. Digital logic 1304₃ can convert numbers in FP16 to IFP. Digital logic 1304₄ can convert numbers in FP8_E5M2 to IFP. Digital logic 1304₅ can convert numbers in FP8_E4M3 to IFP. Digital logic 1302 can include digital logic 1306 configured to convert a 32-, 16-, or 8-bit integer into a extended-bit integer using sign extension. Sign extension may be increasing the number of bits of a binary number while preserving the number's sign. Digital logic 1304₆ can convert numbers in INText to IFP.

Digital logic 1308 can convert an IFP to an output format. Digital logic 1308 can include digital logic 1310₁...1310₆. Digital logic 1310₁ can convert numbers in IFP to FP32. Digital logic 1310₂ can convert numbers in IFP to BF16. Digital logic 1310₃ can convert numbers in IFP to FP16. Digital logic 1310₄ can convert numbers in IFP to FP8_E5M2. Digital logic 1310₅ can convert numbers in IFP to FP8_E4M3. Digital logic 1310₆ can convert numbers in IFP to INText. Digital logic 1308 can include digital logic 1312 configured to convert INText-to-INT (e.g., 32-, 16-, or 8-bit integer).

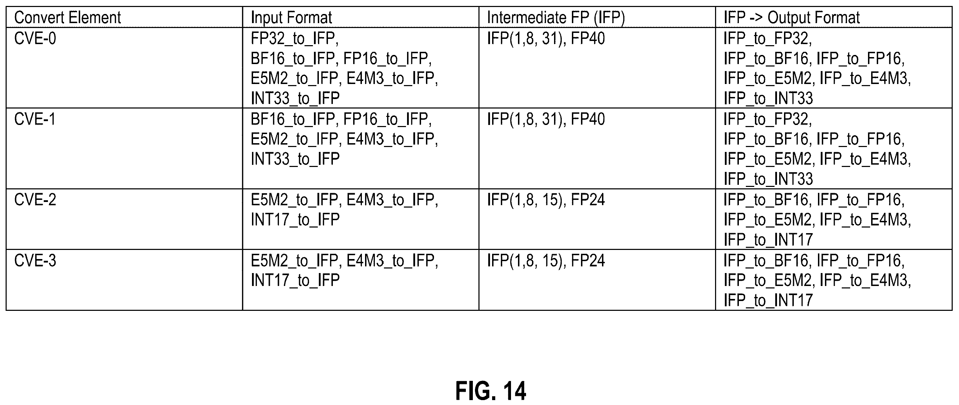

Fig. 14 is a table summarizing format conversion for CVEs according to some embodiments. For a CVE 1104₀ (CVE-0), the input format conversions can be: FP32 to IFP; BF16 to IFP; FP16 to IFP; E5M2 to IFP; E4M3 to IFP; and INT33 to IFP. For a CVE 1104₀ (CVE-0), the intermediate format can be FP40 (1, 8, 31). For a CVE 1104₀ (CVE-0), the output format conversion can be: IFP to FP32; IFP to BF16; IFP to FP16; IFP to E5M2; IFP to E4M3; and IFP to INT33.

For a CVE 1104₁ (CVE-1), the input format conversions can be: BF16 to IFP; FP16 to IFP; E5M2 to IFP; E4M3 to IFP; and INT33 to IFP. For a CVE 1104₁(CVE-1), the intermediate format can be FP40 (1, 8, 31). For a CVE 1104₁ (CVE-1), the output format conversion can be: IFP to FP32; IFP to BF16; IFP to FP16; IFP to E5M2; IFP to E4M3; and IFP to INT33.

For a CVE 1104₂ (CVE-2), the input format conversions can be: E5M2 to IFP; E4M3 to IFP; and INT17 to IFP. For a CVE 1104₂ (CVE-2), the intermediate format can be FP24 (1, 8, 15). For a CVE 1104₂ (CVE-2), the output format conversion can be: IFP to BF16; IFP to FP16; IFP to E5M2; IFP to E4M3; and IFP to INT17.

For a CVE 1104₃ (CVE-3), the input format conversions can be: E5M2 to IFP; E4M3 to IFP; and INT17 to IFP. For a CVE 1104₃ (CVE-3), the intermediate format can be FP24 (1, 8, 15). For a CVE 1104₃ (CVE-3), the output format conversion can be: IFP to BF16; IFP to FP16; IFP to E5M2; IFP to E4M3; and IFP to INT17.

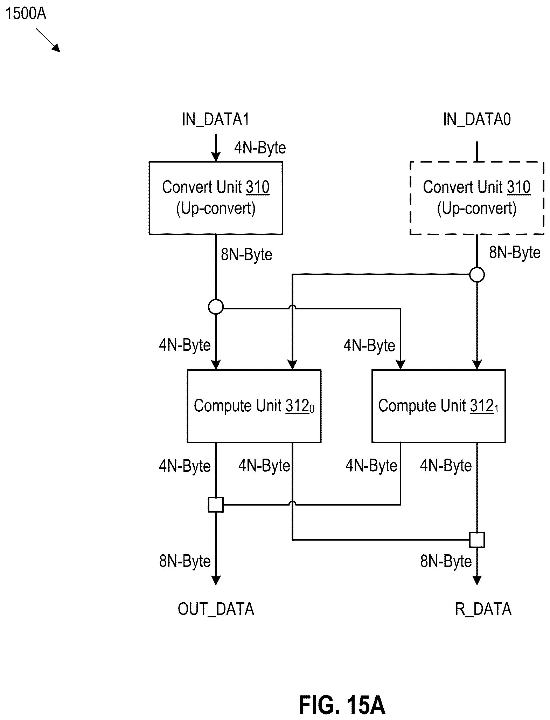

Fig. 15A is a block diagram depicting an ICE instance 1500A according to some embodiments. An ICE instance may be a configured ICE 16. ICE instance 1500A can include a convert unit 310 configured for up-conversion of IN_DATA1. ICE instance 1500A can include two parallel compute units 312₀ and 312₁. Open circuits indicate data splits (e.g., one 8N-byte value to two 4N-byte values) and open squares indicate data concatenations (e.g., two 4N-byte values to one 8N-byte value). IN_DATA0 can be 8N-byte numerical data and IN_DATA1 can be 4N-byte numerical data. Compute unit 312₀ can receive the lower 4N bytes from IN_DATA0 and compute unit 312₁ can receive the upper 4N bytes from IN_DATA0. Convert unit 310 can convert the format of IN_DATA1 to twice the width, which results in output of 8N-byte data. In some embodiments, ICE instance 1500A can include another convert unit 310 configured for up-conversion of IN_DATA0. IN_DATA0 can be 4N-byte numerical data. The other convert unit 310 can convert the format of IN _DATA0 to twice the width, which results in output of 8N-byte data. Compute unit 312₀ can receive the lower 4N bytes from convert unit 310 and compute unit 312₁ can receive the upper 4N bytes from convert unit 310. OUT_DATA can be 8N-byte data and can be a concatenation of 4N-byte data output from compute unit 312₀ and 4N-byte data output from compute unit 312₁. Likewise, R_DATA can be 8N-byte data and can be a concatenation of 4N-byte reduce data from compute unit 312₀ and 4N-byte reduce data from compute unit 312₁. Control interface 508 is omitted for clarity, but described in detail above.

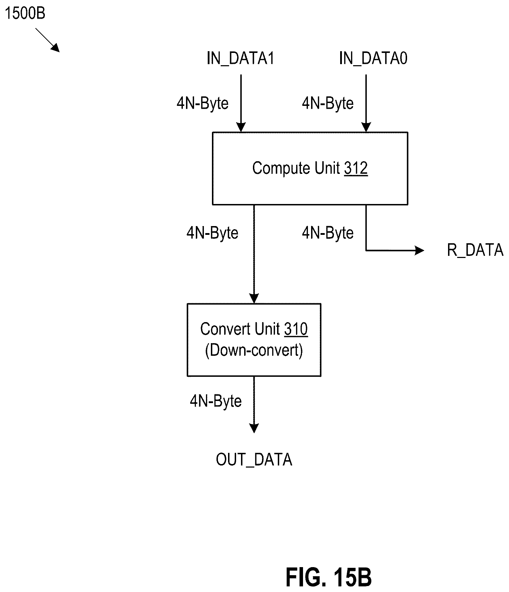

Fig. 15B is a block diagram depicting an ICE instance 1500B according to some embodiments. ICE instance 1500B can include a compute unit 312 and a convert unit 310 configured for down-conversion. Inputs of compute unit 312 can receive IN_DATA0 and IN_DATA1, each being 4N-byte numerical data. The reduced data output of compute unit 312 can supply R_DATA as 4N-byte data. The other output of compute unit 312 can be coupled to an input of convert unit 310 (supplying 4N-byte data). Convert unit 310 can down-convert the format of the 4N-byte numerical data and output 4N-byte OUT_DATA.

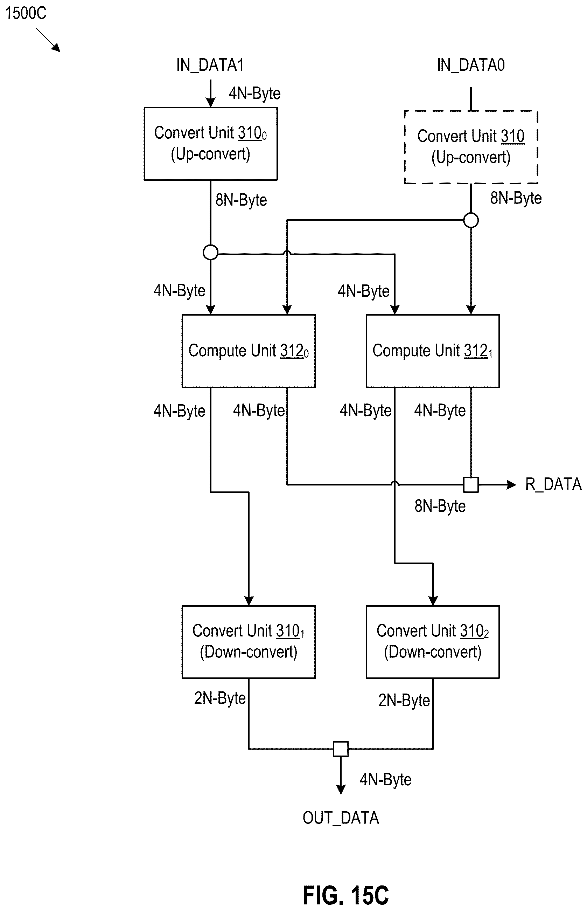

Fig. 15C is a block diagram depicting an ICE instance 1500C according to some embodiments. ICE instance 1500C can include a convert unit 310₀ configured for up-conversion of IN_DATA1. ICE instance 1500C can include parallel compute units 312₀ and 312₁. ICE instance 1500C can include parallel convert units 310₁ and 310₂ configured to perform down-conversion. IN_DATA0 can be 8N-byte numerical data and IN_DATA1 can be 4N-byte numerical data. Compute unit 312₀ can receive the lower 4N bytes from IN_DATA0 and compute unit 312₁ can receive the upper 4N bytes from IN_DATA0. Convert unit 310 can convert the format of IN_DATA1 to twice the width, which results in output of 8N-byte data. In some embodiments, ICE instance 1500C can include another convert unit 310 configured for up-conversion of IN_DATA0. IN_DATA0 can be 4N-byte numerical data. The other convert unit 310 can convert the format of IN_DATA0 to twice the width, which results in output of 8N-byte data. Compute unit 312₀ can receive the lower 4N bytes from convert unit 310 and compute unit 312₁ can receive the upper 4N bytes from convert unit 310. The reduced data output (4N-byte) from each of compute unit 312₀ and 312₁ can be concatenated and supplied as R_DATA (8N-byte). The other data output from compute unit 312₀ can be coupled to the input of convert unit 310₁ (4N-byte data). The other data output from compute unit 312₁ can be coupled to the input of convert unit 310₂ (4N-byte data). The down-conversion of convert units 310₁ and 310₂ can reduce the width from 4N-bytes to 2N-bytes. The outputs of convert units 310₁ and 310₂ can be concatenated and supplied as OUT_DATA (4N-byte).

Referring back to Fig. 3A, together with ICE clustering, an ICE 16 can support a group of ports in one session. The session can supply the input numerical data via one or more of the ports in the group. The ports in the group can operate at different speeds. In some embodiments, an ICE 16 can support multiple sessions, where each session has a different group of ports. Control plane 20 can associate the different groups of ports with ICE 16 to process input numerical data across different sessions. In some embodiments, an ICE 16 can support multiple sessions with the same group of ports. One session can supply one set of input data and another session can supply another set of input data.

In some embodiments, multiple ICEs 16 can be configured as ICE instances and coupled as an ICE cluster (or a super ICE instance). An ICE cluster can be a serial chain cluster, a parallel tree cluster, a multi-port shared cluster, a fully-connected shared cluster, or cluster with local data memory, as described below.

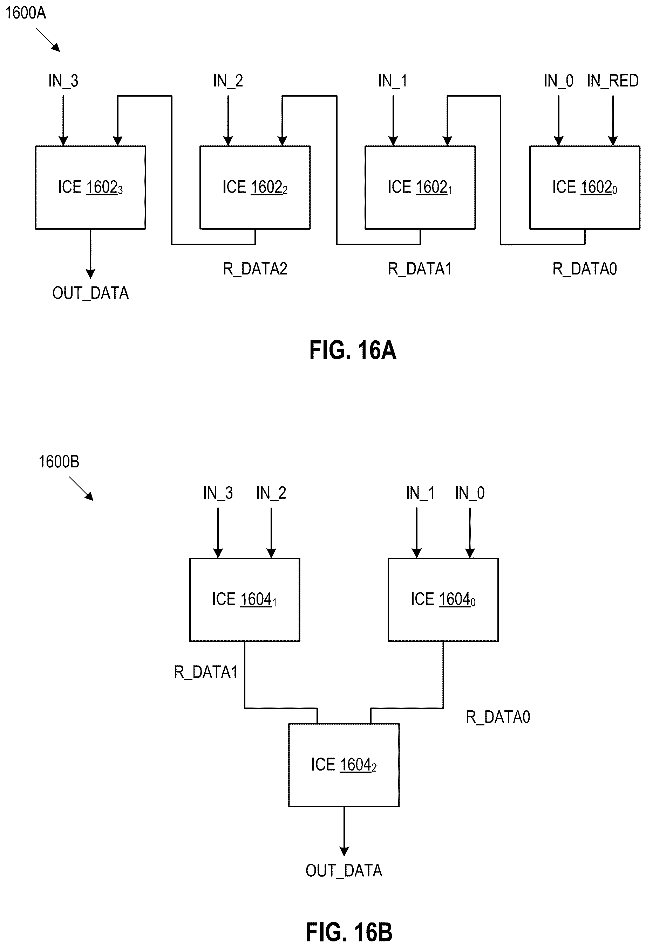

Fig. 16A is a block diagram depicting an ICE cluster 1600A according to some embodiments. ICE cluster 1600A is an example of a serial chain cluster. In the example, ICE cluster 1600A can include four ICE instances 1602₀...1602₃. For example, each ICE instance 1600₀...1600₃ can be an ICE instance 1500C as shown in Fig. 15C. ICE instance 1602₀ can receive first input data (IN_0) at the up-converted input and optionally second input data (IN_RED) at the unconverted input. The second input data (IN_RED) can be reduced data from another ICE instance (if present). The reduced output from ICE instance 1602₀ can be coupled to an unconverted input of ICE instance 1602₁ (R_DATA0). The converted input of ICE 1602₁ instance can receive third input data (IN_1). The reduced output from ICE 1602₁ instance can be coupled to an unconverted input of ICE instance 1602₂. The converted input of ICE instance 1602₂ can receive fourth input data (IN_2). The reduced output from ICE instance 1602₂ can be coupled to the unconverted input of ICE instance 1602₃. The converted input of ICE instance 1602₃ can receive fifth input data (IN_3). The converted output of ICE instance 1602₃ can supply OUT_DATA. Any number of ICE instances can be formed into a serial chain cluster.

Fig. 16B is a block diagram depicting an ICE cluster 1600B according to some embodiments. ICE cluster 1600B is an example of a parallel tree cluster. In the example, ICE cluster 1600B can include ICE instances 1604₀...1604₂. For example, each ICE instance 1604₀...1604₁ can be an ICE instance 1500A as shown in Fig. 15A and ICE instance 1604₂ can be an ICE instance 1500B as shown in Fig. 15B. Inputs of ICE instance 1604₀ can receive data IN_0 and IN_1. Inputs of ICE instance 1604₁ can receive data IN_2 and IN_3. The reduced data output of ICE 1604₀ can supply R_DATA0 to an input of ICE 1604₂. The reduced data output of ICE 1604₁ can supply R_DATA1 to another input of ICE 1604₂. The inputs of ICE 1604₂ can be unconverted inputs. A converted output of ICE 1604₂ can supply OUT_DATA.

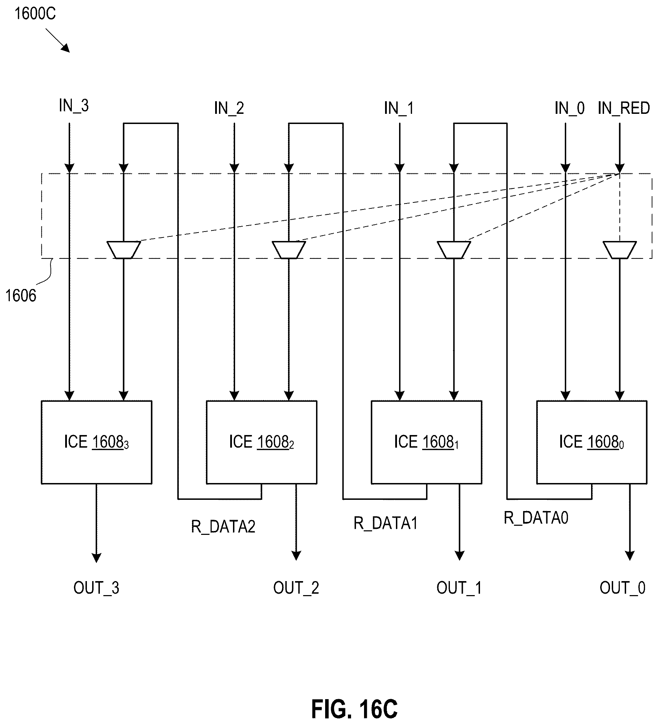

Fig. 16C is a block diagram depicting an ICE cluster 1600C according to some embodiments. ICE cluster 1600C is an example of a multi-port shared cluster. ICE cluster 1600C can include a scheduler 1606 and ICE instances 1608₀...1608₃. For example, each ICE instance 1608₀...1608₃ can be an ICE instance 1500C as shown in Fig. 15C. A scheduler may be digital logic configured to schedule input(s) to be connected to output(s). Open trapezoids of scheduler 1606 represent multiplexers. Scheduler 1606 can receive inputs IN_0, IN_1, IN_2, and IN_3. The inputs IN_0...IN_3 can be coupled to respective inputs of ICE instances 1608₀...1608₃. Scheduler 1606 can receive an input IN_RED (e.g., a reduced input from another ICE instance or cluster). The input IN_RED can be scheduled across the other inputs of ICE instances 1608₀...1608₃. When the input IN_RED is not connected to a given ICE instance, the given ICE instance can receive reduced data from a previous ICE instance in the serial chain. In some configurations, control plane 20 can associate a high-speed (bandwidth) port of packet switch 28 to multiple interfaces of the ICE cluster. In the example of 1600C, a high-speed port can be associated with inputs of ICE instances 1608₀...1608₃. The packet data can be evenly split into inputs IN_0, IN_1, IN_2, and IN_3. The input IN_RED can be high-speed, reduced input from another ICE instance or cluster. The input IN_RED can be evenly split and scheduled to the other inputs of ICE instances 1608₀...1608₃. ICE cluster 1600C can be extended into a fully-connected ICE cluster, where scheduler 1606 can connect each of multiple inputs to any of multiple outputs.

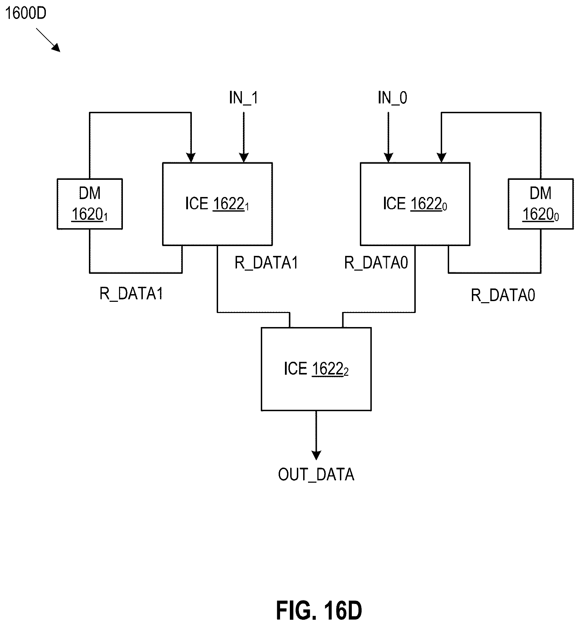

Fig. 16D is a block diagram depicting an ICE cluster 1600D according to some embodiments. ICE cluster 1600D is an example of an ICE cluster with local data memory. ICE cluster 1600D can include ICE instances 1622₀...1622₂. For example, each ICE instance 1622₀ and 1622₁ can be an ICE instance 1500A as shown in Fig. 15A, and ICE instance 1622₂ can be an ICE instance 1500B as shown in Fig. 15B. Each ICE instance 1622₀ and 1622₁ can be coupled to local data memory. One input of ICE instance 1622₀ can receive input data IN_0. Another input of ICE instance 1622₀ can be coupled to an output of data memory (DM) 1620₀. One input of ICE instance 1622₁ can receive input data IN_1. Another input of ICE instance 1622₁ can be coupled to an output of a data memory 1620₁. Reduced data outputs of ICE instances 1622₀ and 1622₁ can be coupled to inputs of ICE instance 1622₂. Another output of ICE instance 1622₀ can be coupled to an input of data memory 1620₀. Another output of ICE instance 1622₁ can be coupled to an input of data memory 1620₁. An output of ICE 1622₂ can supply OUT_DATA. Data memories 1620₀ and 1620₁ can store temporary reduced results output from their respective ICE instances over time. Different results can be applied to the inputs of the respective ICE instances over time. The local data memory can be used to store the temporary reduced results per group of ports or per session. In some configurations, control plane 20 can associate a group of ports from packet switch 28 to one input of an ICE instance. In 1600D example, the packet data from a group of ports can be sequentially scheduled (by a scheduler) into input data IN_0. The corresponding temporary reduced results of the same session can be scheduled (by the scheduler) from data memory 1620₀ into another input of ICE instance 1622₀. The reduced result output of ICE instance 1622₄ can be stored back into data memory 1620₀, or output to the next ICE instance 1622₂. Likewise, the packet data from another group of ports can be sequentially scheduled into input data IN_1; and the corresponding temporary reduced results of the same session can be scheduled from data memory 1620₁ into another input of ICE instance 1622₁. The reduced result output of ICE instance 1622₁ can be stored back into data memory 1620₁, or output to the next ICE instance 1622₂. ICE instance 1622₂ can aggregate and reduce the results of the same session from ICE instance 1622₀ and ICE instance 1622₁. An ICE instance with local storage can be combined in more elaborate ICE clusters, such as star clusters or daisy chain clusters.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

As used herein, the term "couple" and its derivatives include: (a) electrical and communicative coupling; and (b) do not imply a direct connection, but rather may include intervening elements, unless described as "directly coupled."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A data plane of a network switch, comprising:
a packet switch configured to process packets and including a first port and a second port;
a first processor, coupled to the packet switch and a control plane of the network switch, the first processor comprising:
a first digital circuit configured to: receive a first payload of a first packet ingress to the first port; and convert first numerical data in the first payload from a first format to a second format; and
a second digital circuit configured to: receive the first numerical data from the first digital circuit and second numerical data; and perform a first compute operation with the first and second numerical data as input;
wherein the first processor is configured to return a second packet to the packet switch for egress from the second port, a second payload of the second packet including numerical data that results at least in part from the first compute operation.

2. The data plane of claim 1, wherein
the second format and the first compute operation are selected through configuration of the first processor by the control plane.

3. The data plane of claim 1 or 2, wherein:
the second digital circuit is configured to perform the first compute operation to generate third numerical data having the second format;
the first processor further comprises a third digital circuit configured to: receive the third numerical data from the second digital circuit; and convert the third numerical data from the second format to a third format; and
the numerical data in the second payload is the third numerical data output from the third digital circuit.

4. The data plane of any one of the claims 1 to 3, wherein
the first processor further comprises:
a third digital circuit configured to:
receive a third payload of a third packet ingress to a third port of the packet switch, the third payload including the second numerical data; and
convert the second numerical data in the third payload from a third format to the second format;
wherein the second digital circuit is configured to receive the second numerical data from the third digital circuit.

5. The data plane of any one of the claims 1 to 4, wherein
the first processor is configured to perform the first compute operation after performing a second compute operation, and wherein the third numerical data is a result of a second compute operation.

6. The data plane of any one of the claims 1 to 5, wherein
the second digital circuit is configured to perform the first compute operation to generate third numerical data, and wherein the data plane further comprises:
a second processor coupled to the packet switch and the control plane, the second processor configured to: receive a third payload of a third packet ingress from a third port, the third payload including fourth numerical data; and perform a second compute operation with the third and fourth numerical data as input.

7. The data plane of any one of the claims 1 to 6, wherein the second digital circuit is configured to perform the first compute operation to generate third numerical data, and wherein the data plane further comprises:
a second processor coupled to the packet switch and the control plane, the second processor configured to: receive a third payload of a third packet ingress from a third port, the third payload including fourth numerical data; receive a fourth payload of a fourth packet ingress from a fourth port, the fourth payload including fifth numerical data; and perform a second compute operation with the fourth and fifth numerical data as input to generate sixth numerical data; and
a third processor coupled to the packet switch and the control plane, the third processor configured to: receive the third and sixth numerical data and perform a third compute operation with the third and sixth numerical data as input.

8. The data plane of any one of the claims 1 to 7, wherein
the packet switch includes a plurality of ports, which includes the first and second ports, and wherein the data plane further comprises:
a plurality of processors, which includes the first processor; and
a scheduler coupled between the plurality of ports and the plurality of processors.

9. The data plane of any one of the claims 1 to 8, wherein
the second digital circuit is configured to perform the first compute operation to generate third numerical data, and wherein the data plane includes a memory configured to store the third numerical data.

10. The data plane of any one of the claims 1 to 9, wherein
the first format comprises a first number of bits and a first representation of numerical values, and wherein the second format comprises a second number of bits and a second representation of numerical values.

11. A network switch, comprising:
a control plane including a central processing unit, CPU, and a memory; and
a data plane as set forth in any one of the preceding claims.

12. A method of processing packets in a network switch, the method comprising:
processing packets in a packet switch of the network switch; and
controlling, by a first processor coupled to the packet switch and a control plane of the network switch, the processing of the packet switch, by:
receiving, at a first digital circuit of a first processor, a first payload of a first packet ingress to a first port of the packet switch;
converting by the first digital circuit the first numerical data in the first payload from a first format to a second format;
receiving, at a second digital circuit, the first numerical data from the first digital circuit and second numerical data;
performing, by the second digital circuit, a first compute operation with the first and second numerical data as input; and
returning, from the first processor to the packet switch, a second packet for egress from a second port of the packet switch, a second payload of the second packet including numerical data that results at least in part from the first compute operation.

13. The method of claim 12, further comprising:
configuring, by the control plane, the first processor to select the second format and the first compute operation.
